(19) Europäisches Patentamt
European Patent Office
Office européen des brevets

(11) Publication number: 0 127 206 A1

# (12) EUROPEAN PATENT APPLICATION

(21) Application number: 84200499.6

(22) Date of filing: 09.04.84

(51) Int. Cl.[3]: C 01 B 17/05
B 01 D 53/14, B 01 D 53/34
C 10 K 1/12, C 10 K 1/16
C 07 C 7/11

(30) Priority: 02.05.83 US 490930

(43) Date of publication of application: 05.12.84 Bulletin 84/49

(84) Designated Contracting States: BE CH DE GB IT LI NL SE

(71) Applicant: STAUFFER CHEMICAL COMPANY
Westport Connecticut 06880(US)

(72) Inventor: Happel, John
69 Tompkins Avenue
Hastings-on-Hudson, N.Y. 10706(US)

(72) Inventor: Orcutt, John Chandler
21 Somerston Road
Yorktown Heights, N.Y. 10598(US)

(72) Inventor: Van Brocklin, Lester Paul
7 Hillside Drive
Thiells, N.Y. 10984(US)

(74) Representative: Urbanus, Henricus Maria, Ir. et al,
c/o Vereenigde Octrooibureaux Nieuwe Parklaan 107
NL-2587 BP 's-Gravenhage(NL)

## (54) Process for desulfurizing fuel gases.

(57) A fuel gas, at superatmospheric pressure, containing $CO_2$ and $H_2S$ contaminants is desulfurized. The process comprises absorbing the contaminants in a solvent absorbent forming a substantially more pure fuel gas, desorbing the contaminants from the absorbent as a new gas stream, passing the desorbed contaminants, while at superatmospheric pressure, to a liquid phase Claus reactor (17) to react the dilute $H_2S$ with $SO_2$ in the liquid media forming sulfur, incinerating unreacted $H_2S$ contained in the Claus tail gas to $SO_2$, absorbing the $SO_2$ in an aqueous absorbent and recycling the $SO_2$-rich absorbent thus produced to the Claus reactor (17).

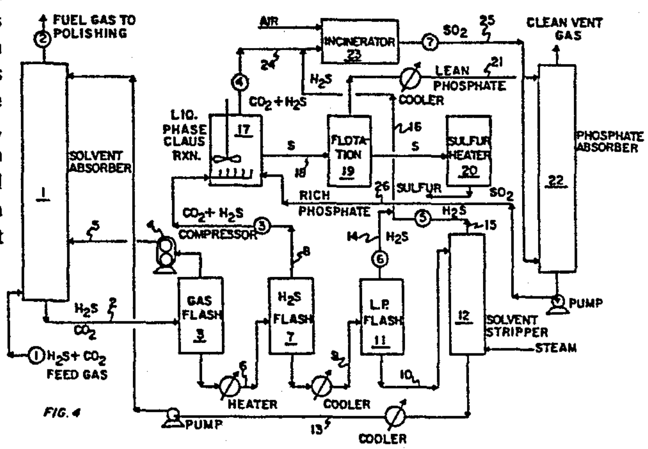


FIG. 4

EP 0 127 206 A1

# PROCESS FOR DESULFURIZING FUEL GASES

## Background of the Invention

### Field of the Invention

The invention relates to desulfurization of a fuel gas containing carbon dioxide ($CO_2$) and hydrogen sulfide ($H_2S$) as contaminants.

### Description of the Prior Art

Coal gasification to produce fuel gas generally yields a product having a relatively high level of undesired $CO_2$ contaminant as compared to $H_2S$ contaminant, for example, from 3/1 to 30/1 or above in $CO_2/H_2S$ ratio on a volume basis. Similar $CO_2/H_2S$ ratios also occur in the gasification of heavy petroleum residuum or coke and as a result of processing certain natural gas streams. Sulfur from such gas streams needs to be removed in order to comply with air pollution standards. However, it is usually either difficult or not possible to remove $H_2S$ from such streams using the conventional Claus process due to the dilute $H_2S$ content, i.e., the relatively high proportion of $CO_2$ to $H_2S$ in such gases. These difficulties are well recognized. A. R. Laengrich and W. L. Cameron in Oil and Gas Journal, March 20, 1978, pp. 188 and following, report expected recoveries from well engineered and operated Claus plants. For example, at concentrations of 15% to 20% $H_2S$ the expected recovery of sulfur is only in the 91% to 94% range. At still lower $H_2S$ concentrations, Claus plant recoveries of sulfur are even less. Some methods for processing dilute $H_2S$ while maintaining reasonable sulfur recovery are given below.

A number of patents discuss processes for desulfurizing a fuel gas containing $CO_2$ and $H_2S$ contaminants. U.S. Patent No. 3,864,460 to J. A. Connell shows a molecular sieve cleanup section for conventional Claus tail gas after initial absorption-stripping and Claus processing of the feed gas. U.S. Patent Nos. 3,880,986 to D. K. Beavon and 4,113,849 to G. R. Atwood describe combining the feed gas with additional $SO_2$ prior to reaction in a conventional Claus reactor.

U.S. Patent Nos. 4,198,387 and 4,198,388 to J. A. Laslo et al. teach incineration of a foul gas stream from certain specific absorber-desorber apparatus to convert a portion of the $H_2S$ to $SO_2$ prior to conventional Claus reaction. U.S. Patent No. 4,263,270 to W. Groenendaal et al. shows reducing the $CO_2$ content in a portion of the feed and recycling the treated gas stream for combination with the remaining feed gas with subsequent reaction in a conventional Claus reactor.

U.S. Patent No. 3,533,732 to W. P. Moore et al. teaches a process in which a feed gas containing a mixture of $H_2S$ and $CO_2$ is treated in a solvent absorber to absorb $H_2S$, the $H_2S$ is desorbed, and the desorbed gas stream is passed to a conventional Claus catalytic

reactor for conversion of the $H_2S$ to sulfur. Tail gas from the reactor, after removal of the sulfur, is vented to the atmosphere.

The Claus process has long been the traditional technology used to treat gases containing hydrogen sulfide. Sulfur recoveries of up to 97% have been achieved with relatively concentrated $H_2S$ streams while using multiple stages of such technology. Achievable levels decrease as the $H_2S$ content decreases. However, current air pollution regulations as well as problems of atmospheric pollution by acid rain are gradually increasing the requirement for recovery beyond that attainable by the conventional Claus or modified Claus processes. A number of tail gas cleanup systems have been developed but these schemes have proven to be very expensive when added to Claus units operating on dilute $H_2S$ or directly on a dilute $H_2S$ stream, e.g., the Stretford process.

One of the most attractive possibilities is that offered by conducting the Claus reaction in the liquid phase, such as that employed in the phosphate process developed by Stauffer Chemical Company (e.g., as described in U.S. Patent No. 3, 911,093). By conducting the reaction between hydrogen sulfide and an $SO_2$-containing aqueous media, it is possible to achieve much lower cost and more efficient recovery of sulfur by the overall reaction:

$$2H_2S+SO_2 \longrightarrow 3S+2H_2O$$

This type of liquid phase reaction is proposed in the process described by Tarhan et al. (U.S. Patent No.

4,124,685) in which an industrial gas containing $H_2S$ and $CO_2$ is treated with an alkanolamine solution. Conditions are controlled so that no more than three moles of $CO_2$ are absorbed per mole of $H_2S$ for reasons of economy. However, when processing gases derived from methanation of synthesis gas and with some natural gases, it is desirable to remove considerably more $CO_2$ After the subsequent stripping step, the resulting $H_2S$ and $CO_2$-containing gas is processed in a liquid Claus-type reactor. Many details of operation are cited in the Tarhan et al. patent, but use of superatmospheric pressure is not suggested. Hence, it is presumed that the Tarhan et al. process is intended to operate at atmospheric pressure. This is probably another reason it is necessary to restrict operation of the Tarhan et al. process to low $CO_2$ removal ratios.

In the phosphate liquid Claus process it has recently been determined that operation at superatmospheric pressure is beneficial so that the above restriction (i.e. , $CO_2/H_2S$ ratio) involved in regard to the Tarhan et al. process is not necessary. That is, dilute $H_2S$ streams can be used. Also, increased pressure will enable a reduction in size of the Claus reactor. The Tarhan et al. process uses excess $H_2S$ feed over that required to react stoichiometrically with the $SO_2$ entering the reactor in order to insure that all of the $SO_2$ is completely removed from the system. Then the excess $H_2S$ is recycled to the alkanolamine absorption system, since the presence of $SO_2$ in the feed stream would be detrimental causing solution acidification, solvent degradation and corrosion.

The scheme proposed by the present invention overcomes all these problems of low Claus recovery, excessive cost and off-gas recycle and in addition offers an economic method of removing COS and $CS_2$ which are generally present in methanation gases from synthesis gas processes, unless expensive hydrolysis steps are employed in the process sequence. In the proposed process, any COS and $CS_2$ contained in the gas stream pass through the reactor with vent gas and are incinerated to $SO_2$.

Certain prior art references have indicated that the liquid phase Claus reaction was reaction rate controlled. Representative references of this type include: W. N. Marchant et al., "The Chemical Reactions of Sulfur in the Citrate Process for Flue Gas Desulfurization", U.S. Department of the Interior, Bureau of Mines, Report of Investigations 8540; G. C. Thom et al., "A Mechanistic Interpretation of the Reduction of Sulfur Dioxide to Elemental Sulfur in Regenerable Flue Gas Desulfurization Processes", American Chemical Society Meeting paper, September 10, 1979; and G. T. Rochelle et al., "Process Alternatives for Stack Gas Desulfurization with $H_2S$ Stack Gas Desulfurization with $H_2S$ Regeneration to Produce Sulfur", AIChE Symposium Series 188, Volume 75, pp. 48-61 (1979).

The above references, including J. L. Keller U.S. Patent No. 2,729,543, all have as data results from well stirred and back mixed reactors. In such reactors chemical reactions which are faster than the residence time of the back mixed reactor can be obscured if the reaction products of the fast reactions continue to react to other species. This appears to happen here.

The results discussed below indicate that the liquid phase Claus reaction

$$2H_2S+SO_2 \longrightarrow 3S+2H_2O$$

is actually very fast. However, in a several minute residence time backmixed reactor the sulfur and $SO_2$ ($HSO_3^-$) have time to react to thiosulfate.

$$S+HSO_3^- \longrightarrow S_2O_3^=$$

When this occurs, the thiosulfate must then be reacted out with $H_2S$ by the reaction

$$2H^+ +2H_2S+S_2O_3^= \longrightarrow 4S+3H_2O$$

This last reaction is then the kinetic rate controlling reaction for the backmixed reactor, but not for a fast, pipe reactor. The Bureau of Mines Report in Figure 3 demonstrates that the rate of thiosulfate reaction is the same as the overall reaction in a stirred continuous reactor. They state on page 7 that the thiosulfate decomposition reaction is the rate limiting step. In actuality, thiosulfate formation depends upon the reactor design and residence time as illustrated below.

Data shown in British Patent No. 1,450,845 illustrate that the reaction is actually mass transfer controlled and that the liquid phase Claus reaction rate is nearly instantaneous. For example, pipe reactor experiments in that patent found that there was a minimum liquid flow required in the particular pipe used for the reaction to proceed at a fast rate (about 3

gallons/minute/0.5 in. pipe). A substantial 30% to 130% excess $H_2S$ was present during such experiments. At above 3 gallons/minute liquid flow rate, sulfur formation in large amounts visually confirmed the very rapid reaction of $H_2S$ and $SO_2$ to sulfur contrary to the teachings of the Bureau of Mines report, above, and U.S. Patent No. 2,729,543 to J. L. Keller. Liquid analysis also confirmed formation of sulfur and the disappearance of $SO_2$ with no formation of $S_2O_3$.

Examples 3 and 4 of British Patent No. 1,450,845 show complete regeneration of liquor in about two seconds at higher than three gallon per minute flows. Example 2 shows incomplete regeneration at one gallon per minute due to presence of about 0.25 gm/liter $SO_2$ in the outlet liquor which would be characteristic of unregenerated solutions. The overall process with recycle to an $SO_2$ absorber cannot maintain abatement unless residual $SO_2$ in the reactor effluent is less than about 0.1 gm./liter $SO_2$. In addition, visual examination of the pipe shows slug flow at one gallon per minute flows with very poor mixing. This is the reason for poor mass transfer and poor reaction rate at one gallon per minute flow rates but longer residence times. At flow rates of over three gallons per minute the mixing was excellent due to dispersed bubble flow.

## Summary of the Present Invention

The present invention is a process for desulfurization of a fuel gas containing a $CO_2$ contaminant and a relatively dilute level of $H_2S$ contaminant. Other

contaminants present at trace levels may include COS and $CS_2$. By "fuel gas" is meant any gas that can be burned and includes, but is not limited to, gases from natural gas processing, refinery fuel gases, as well as those from the gasification of coal or heavy hydrocarbons. The process comprises absorbing a major amount of those contaminants from the feed gas, which is at superatmospheric pressure, by means of a solvent absorbent to form a substantially more pure fuel gas, followed by desorbing the contaminants from the absorbent as a foul gas stream. The foul gas stream, still under superatmospheric pressure, is then passed to a liquid phase Claus reactor where the $H_2S$ reacts with sulfur dioxide ($SO_2$), as $HSO_3^-$, forming sulfur. The trace contaminants of COS and $CS_2$ do not hydrolyze or react in this system due to the generally low temperatures. Due to low solubility in the aqueous solution of both COS and $CS_2$ plus the low gaseous concentrations, e.g., about 100 ppm level in this case, essentially no COS or $CS_2$ exits the reactor with the aqueous sulfur slurry to exit in absorber gas. Excess $H_2S$, with unreacted COS and $CS_2$ from the reactor, is substantially completely incinerated forming $SO_2$, which is absorbed in an aqueous absorbent as $HSO_3^-$ forming a more pure vent gas. The absorbent containing the $SO_2$, as $HSO_3^-$, is recycled to the Claus reactor so that the $SO_2$ can react with $H_2S$ contained in the foul gas from the desorption step described earlier.

The present process treats the feed gas which is under conditions which insure passage of the $H_2S$ containing acid gas to the liquid phase Claus reactor while under superatmospheric pressure. This makes the overall liquid phase Claus reaction more efficient than otherwise

would be possible if it were operated at atmospheric pressure. Without the high reaction efficiency the reactor becomes either uneconomically large or incapable of adequately regenerating the aqueous solvent while processing dilute $H_2S$.

$H_2S$ remaining in the reactor vent gas is combined with $H_2S$ from the low pressure flash and solvent stripping operation and incinerated forming $SO_2$. This gaseous $SO_2$ is absorbed in regenerated liquor and recycled to the Claus reactor.

Sufficient excess air can be employed in the incinerator so that substantially no COS or $CS_2$ remain or are formed from trace amounts of hydrocarbon present in the $H_2S$ stream. The $SO_2$ equivalent to that required in the process, is absorbed in an aqueous absorbent. This absorption is very efficient and is conducted in a relatively rich $SO_2$-containing stream, instead of a more diluted stream such as practiced by Tarhan et al. Another advantage in using a separate $SO_2$ absorber is that it is not necessary to produce $SO_2$ by burning elemental sulfur. This is required in the Tarhan et al. process since combustion of a gas stream containing small amounts of hydrocarbon with a stoichiometric amount of air causes contamination of the recycle gas to the ethanolamine absorber.

Description of the Drawings

The present invention is further illustrated by reference to the Drawings, which form a part of the present specification, wherein:

Figs. 1-3 illustrate calculated values of reaction characteristics of dilute gaseous $H_2S$ and aqueous $SO_2$

to sulfur in three different liquid Claus reaction systems; and

Fig. 4 is a schematic view of the process of the present invention.

## Description of the Preferred Embodiments

As depicted in the Fig. 4, a feed fuel gas, at superatmospheric pressure, comprising methane and containing $CO_2$ contaminant and a relatively dilute level of $H_2S$ contaminant, is fed to a solvent absorber 1 in order to remove the contaminants. The solvent absorber preferably operates at ambient temperature and elevated pressure (e.g., 15 to 1000 psi). The preferred absorbent is a dialkyl ether or a polyalkylene glycol as described in U.S. Patent No. 3,533,732, which is incorporated hereby by reference. One especially suitable solvent is tetraethylene glycol dimethyl ether (available under the trademark SELEXOL from Allied Chemical Corporation) as described by J. W. Sweny et al., Chemical Engineering, September 7, 1970, pp. 54-56. Other solvents which can be employed in solvent absorber 1 include alkanolamines, hot potassium carbonate, alkali metal salts of dialkyl-substituted amino acids, and cryogenic methanol.

Solvent absorber 1 results in absorption of substantially all the $H_2S$ in the fuel gas as well as practically all of the $CO_2$ (e.g., about 99%). The substantially more pure fuel gas from the absorber is sent to an appropriate polishing unit for treatment with a suitable catalyst (e.g., Ni) to convert the last traces of any carbon monoxide to methane. The absorbent containing absorbed $H_2S$ and $CO_2$ is sent via line 2 to appropriate desorption apparatus prior to the liquid phase Claus reaction.

The absorbent is first sent to a high pressure flash drum 3 operated at solvent temperature and at the pressure used in the solvent absorber to remove a portion of the $CO_2$ plus a smaller quantity of hydrocarbons as gas. The flashed gas is returned to the solvent absorber 1 through compressor 4 in line 5. Effluent from flash drum 3 is reduced somewhat in pressure (e.g., 10 to 800 psi) and is heated as it passes through line 6 to flash drum 7. In flash drum 7 a major portion (e.g., 70% to 80%) of the $H_2S$ contained in the absorbent along with the remaining $CO_2$ is flashed overhead in line 8 to a Claus reactor. Effluent from flash drum 7 passes via lines 9 and 10, respectively, to low pressure flash drum 11 and solvent stripper 12 for removal of remaining $H_2S$. Flash drum 11 operates at essentially atmospheric pressure and elevated temperature (e.g., 100° to 200°C.). In solvent stripper 12 the lean solvent is preferably stripped by an air stream which reduces the $H_2S$ content in the absorbent to a very low value. The lean absorbent is pumped back to absorber 1 via line 13 after being cooled. The overhead $H_2S$ from the flash drum 11 and solvent stripper 12 is taken off lines 14 and 15 which are combined into line 16 for later combination with Claus exit gas.

The bulk of the $H_2S$ and the $CO_2$ removed via line 8 from high pressure flash drum 7 is passed to a liquid phase Claus reactor for combination with $SO_2$ and reaction, preferably, in aqueous media to form sulfur in reactor 17. The preferred type of process is the phosphate process developed by Stauffer Chemical Company, which is known under the service mark AQUACLAUS.

In the reactor 17, $SO_2$ and $H_2S$ react at superatmospheric pressure in an appropriate liquid absorbent medium for the $SO_2$ (e.g., phosphate or citrate aqueous

solution, or organic acid with a pKa of 2-7) under conditions of pH and temperature used in conventional liquid phase Claus reactors (e.g., pH values of 2.5 to 6.5, temperatures of 20°C. to 160°C., e.g., 20-95°C., and buffer concentrations of up to about 2.5 molar). The increased pressure is needed to react the $H_2S$ which is contained at dilute levels. The pressure in the reactor can range from over about 1.0 to about 100 atmospheres, preferably 5-50 atmospheres. The absorbent containing sulfur is passed through line 18 to a flotation apparatus where sulfur is removed, passed to heater 20, and recovered.

Figs. 1-3 present calculated values of reaction characteristics of gaseous dilute $H_2S$ (5 vol. %) and aqueous solution of $SO_2$ to sulfur in three different reaction systems. The first system (Fig. 1) is a single, well mixed, gas-liquid tank reactor. The second (Fig. 2) employs two such reactors in series with countercurrent gas-liquid flow. The third (Fig. 3) uses a single cocurrent gas-liquid pipe reactor.

The reaction of $H_2S$ and $SO_2$ in the liquid phase is assumed to be essentially instantaneous. Therefore, the reaction rate depends upon the mass transfer rate of the slightly soluble $H_2S$ from the gas phase to the liquid phase. The mass transfer coefficients for the operations are assumed to be 1.7 $min^{-1}$ for the stirred tanks and 3.0 $min^{-1}$ for the pipe reactor. Such values are consistent with the literature.

In Figs. 1, 2, and 3 the abscissa represents the volumetric ratio, L/G, of liquid to gas under pressure entering the reaction systems. The liquid residence time on a gas-free basis is 10 minutes for each reactor.

The set of curves on the left indicate the grams of $SO_2$ per liter reacted out of the liquid for a given L/G ratio at pressures varying from 1 atmosphere to 10 atmospheres. Simultaneously, the curve extending to the right gives values of $H_2S$ conversion to sulfur versus L/G. For example, in Fig. 1 the 10 atmosphere curve shows that between 0.5 and 2.4 gms/liter of $SO_2$ can be removed from the liquor as the liquid to gas ratio varies. At liquid to gas ratios near 1.0, the conversion (reaction of $H_2S$) is over 90%. However, at lower liquid to gas ratios, the fraction of $H_2S$ converted drops off because more gas and $H_2S$ enters the reactor, while the liquid volume (and area for mass transfer) remain constant. Conversely, as the liquid to gas ratio decreases, the liquid flow remains the same (at constant liquid residence time), while the total $H_2S$ transferred increases due to the greater $H_2S$ concentration in the effluent gas. Therefore, the amount of $SO_2$ reacted per liter of liquid increases. Additionally, as pressure varies so does mass transfer and the amount of $SO_2$ reacted.

The points A, B, and C refer to a case where there is a sixty percent conversion of $H_2S$ which gives $SO_2$ removal from inlet liquor varying between about 0.3 and 1.15 gms $SO_2$/l. depending on pressure. Higher pressures are required for higher conversions.

Figs. 2 and 3 are similar to Fig. 1 except there is greater residence time for the two reactor case and a better mass transfer driving force and mass transfer coefficient for the pipe reactor case

The overhead absorbent from flotation apparatus 19 is cooled and passed through line 21 to a suitable

absorber 22 for use in later absorption of $SO_2$ generated in incinerator 23 which treats the excess $H_2S$ and the $CO_2$ overhead in line 24 from the Claus reactor 17 as well as the $H_2S$ in line 16 from flash drum 11 and solvent stripper 12, described earlier. If desired, excess air can be used in incinerator 23 to incinerate any COS and/or $CS_2$ that might be present.

The $SO_2$ resulting from incinerator 23 is passed through line 25 to be absorbed in absorber 22 and the $SO_2$-rich absorbent is recycled in line 26 to the Claus reactor 17 for reaction with $H_2S$ from flash drum 7. A description of the preferred phosphate absorption procedure which is shown in Fig. 4 for absorption of $SO_2$ from the incinerator with recycle of the $SO_2$-rich phosphate absorbent to the Claus reactor, is also described in "Combine Sulfur Recovery with $SO_2$ Abatement" by L. P. Van Brocklin et al., 1980 National Petroleum Refiners Association, Paper AM-80-37.

Fig. 4 designates by various circled numbers various exit and entrance streams to the various of the apparatus shown in that Figure. Listed below is an embodiment of a calculated process material balance (in mole/hour-stream time) for a proposed process to illustrate one possible embodiment of the present invention:

| Stream No: | 1 | 2 | 3 | 4 |
|---|---|---|---|---|
| Name: | Feed Gas | To Polisher | Reactor Feed | Reactor Exit |
| CO | 2135 | 2135 | -- | -- |
| $CO_2$ | 33,712 | 332 | 29,774 | 29,774 |
| $H_2$ | 8128 | 8128 | -- | -- |
| $CH_4$ | 23,892 | 23,892 | -- | -- |
| $C_2H_6$ | 272 | 272 | -- | -- |
| $H_2S$ | 1007 | -- | 765 | 94 |
| $N_2$ | -- | -- | -- | -- |
| $O_2$ | -- | -- | -- | -- |
| $SO_2$ | -- | -- | -- | -- |

| Stream No: | 5 | 6 | 7 |
|---|---|---|---|
| Name: | Air Stripper Overhead | Flash Drum Overhead | Gas to Absorber |
| CO | -- | -- | -- |
| $CO_2$ | 1091 | 2515 | 33,380 |
| $H_2$ | -- | -- | -- |
| $CH_4$ | -- | -- | -- |
| $C_2H_6$ | -- | -- | -- |
| $H_2S$ | 48 | 194 | -- |
| $N_2$ | 608 | -- | 3032 |
| $O_2$ | 162 | -- | 302 |
| $SO_2$ | -- | -- | 336 |

The Examples which follow help to illustrate certain aspects of the present invention.

## EXAMPLE 1

This Example is presented merely to show the effect of COS in an aqueous Claus process and to illustrate that, if said compound were present, it would essentially pass through the reactor without being absorbed or reacted. This allows for the off gas containing it to be incinerated converting the COS to $SO_2$ with subsequent removal in an appropriate absorber.

The apparatus used for this test is described in British Patent No. 1,450,845 with the following operating conditions being used:

| | |
|---|---|
| Reactor liquid residence Time: | 20 minutes |
| Stack gas flow rate: | 25 $ft^3$/min. |
| $SO_2$ to absorber: | 0.25 $ft^3$/min. |
| $H_2S$ to reactor: | 0.625 $ft^3$/min. |
| COS to reactor: | 0.025 $ft^3$/min. |
| Reactor temperature: | 154°F. |
| Liquor circulation rate: | 2 gallons/minute |

The composition of COS containing gas streams were the following (the abbreviation "N.D." means "not detectable"):

Test 1

| Gas Stream | %$H_2S$ | %COS | %$H_2O$* |
|---|---|---|---|
| Reactor feed | 95.2 | 4.8 | -- |
| Reactor off gas | 80.0 | 17.1 | 3.0 |
| Column off gas | -- | N.D. | -- |

Test 2

| Gas Stream | %$H_2S$ | %COS | %$H_2O$* |
|---|---|---|---|
| Reactor feed | 97.9 | 2.1 | -- |
| Reactor off gas | 90.3 | 6.7 | 3.0 |
| Column off gas | -- | N.D. | -- |

* the sample was cooled to 75°F.

EXAMPLE 2

This Example, analogous to the showing made in Example 1, illustrates the results obtained when a pilot plant Claus reactor was operated for an extended period of time with a wide range of operating conditions. The results showed no effects from either COS or $CS_2$ on the process, $SO_2$ abatement levels, nor was COS or $CS_2$ detected in the absorber effluent. The reactor feed gas had the following approximate composition:

| Species | % Volume |
|---|---|
| $H_2S$ | 95+ |
| $N_2$ | 0.83 |
| $CO_2$ | 0.25 |
| $H_2$ | 0.80 |
| $CH_4$ | 1.65 |
| $CS_2$ | 0.22 |
| COS | 0.57 |

The process operating conditions were in the following ranges:

| | |
|---|---|
| Reactor residence time: | 3 to 10 minutes |
| Absorber gas flow rate: | 75 to 125 $ft^3$/min. |
| Reactor temperature: | 155° to 165°F. |
| Liquor circulation rate: | 1 to 4 gallons/min. |
| $SO_2$ loading of liquor: | 1 to 5 gm./l. |

The foregoing Examples are merely for illustrative purposes and should not be construed in a limiting manner. The scope of protection sought is set forth in the claims which follow.

What is Claimed:

1. A process for the desulfurization of a fuel gas containing carbon dioxide and hydrogen sulfide as contaminants which comprises:

(a) absorbing from the fuel gas, which is at superatmospheric pressure, a major amount of the carbon dioxide and hydrogen sulfide in a solvent absorbent with the formation of a substantially more pure fuel gas;

(b) desorbing as a gas stream a major amount of the absorbed carbon dioxide and hydrogen sulfide from the absorbent;

(c) passing the gas stream containing desorbed carbon dioxide and hydrogen sulfide at sufficient superatmospheric pressure to a liquid phase Claus reactor so as to react the desorbed hydrogen sulfide with sulfur dioxide in liquid media forming sulfur;

(d) incinerating unreacted hydrogen sulfide from the Claus reactor forming sulfur dioxide;

(e) absorbing the sulfur dioxide formed in (d) in an aqueous absorbent with the formation of a substantially more pure vent gas; and

(f) recycling the absorbent containing the sulfur dioxide to the Claus reactor for reaction of the sulfur dioxide with hydrogen sulfide contained in the desorbed gas stream from (b).

2. A process as claimed in Claim 1 in which the solvent used in step (a) is a dialkyl ether of a polyalkylene glycol.

3. A process as claimed in Claim 1 in which the desorption in step (b) is carried out in a flash drum.

4. A process as claimed in Claim 1 in which the aqueous media in step (c) is selected from the group consisting of phosphate absorbent, citrate absorbent, and organic acid absorbent.

5. A process as claimed in Claim 1 in which the aqueous media in step (c) comprises a phosphate absorbent.

6. A process as claimed in Claim 1 in which residual hydrogen sulfide is removed from the solvent absorbent after passage of the gas stream containing desorbed carbon dioxide and hydrogen sulfide to the Claus reactor.

7. A process as claimed in Claim 6 in which the residual hydrogen sulfide is combined with unreacted hydrogen sulfide and carbon dioxide from the Claus reactor and then incinerated forming sulfur dioxide.

8. A process as claimed in Claim 1 in which the solvent used in step (a) is a dialkyl ether of a polyalkylene glycol and the aqueous media used in step (c) and the absorbent used in step (e) is a phosphate.

9. A process claimed in Claim 1 wherein the solvent used in step (a) is selected from the group consisting of a dialkyl ether of a polyalkylene glycol, an alkanolamine, hot potassium carbonate, an alkai metal salt of dialkyl-substituted amino acids, and cryogenic methanol.

10. A process as claimed in Claim 1 wherein excess air is used in incineration step (d).

11. A process as claimed in Claim 8 in which residual hydrogen sulfide is removed from the solvent absorbent after passage of the gas stream containing desorbed carbon dioxide and hydrogen sulfide to the Claus reactor.

12. A process as claimed in Claim 11 wherein the residual hydrogen sulfide is combined with unreacted hydrogen sulfide and carbon dioxide from the Claus reactor and then incinerated forming sulfur dioxide.

13. A process as claimed in Claim 12 wherein excess air is used when the residual hydrogen sulfide and unreacted hydrogen sulfide and carbon dioxide are incinerated.

14. A process as claimed in Claim 13 wherein compounds selected from the group consisting of COS, $CS_2$, and mixtures thereof are also incinerated.

SINGLE CONTINUOUS STIRRED TANK REACTOR

LIQUID HOLDING TIME: 10 MINUTES
TEMPERATURE: 40°C
%$H_2S$ IN FEED: 5 VOL.%

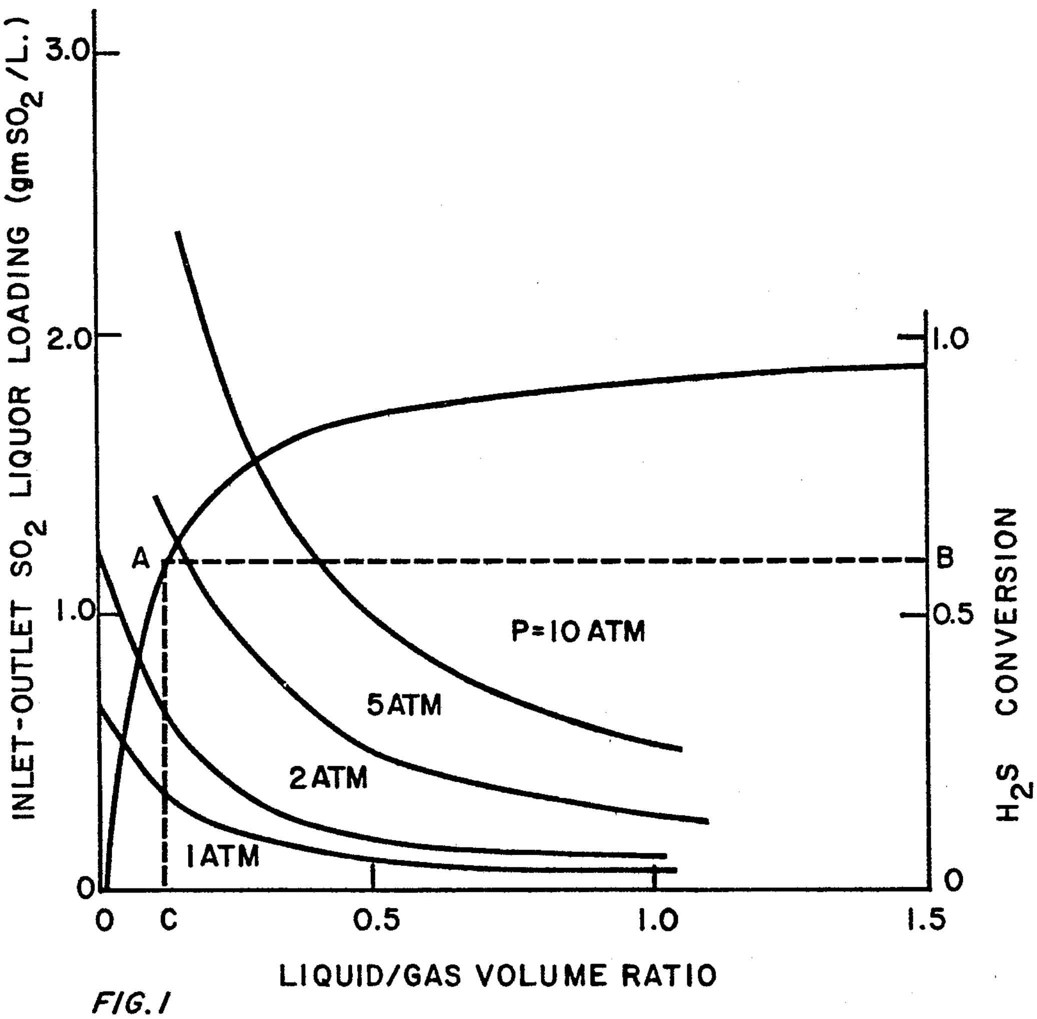


FIG. 1

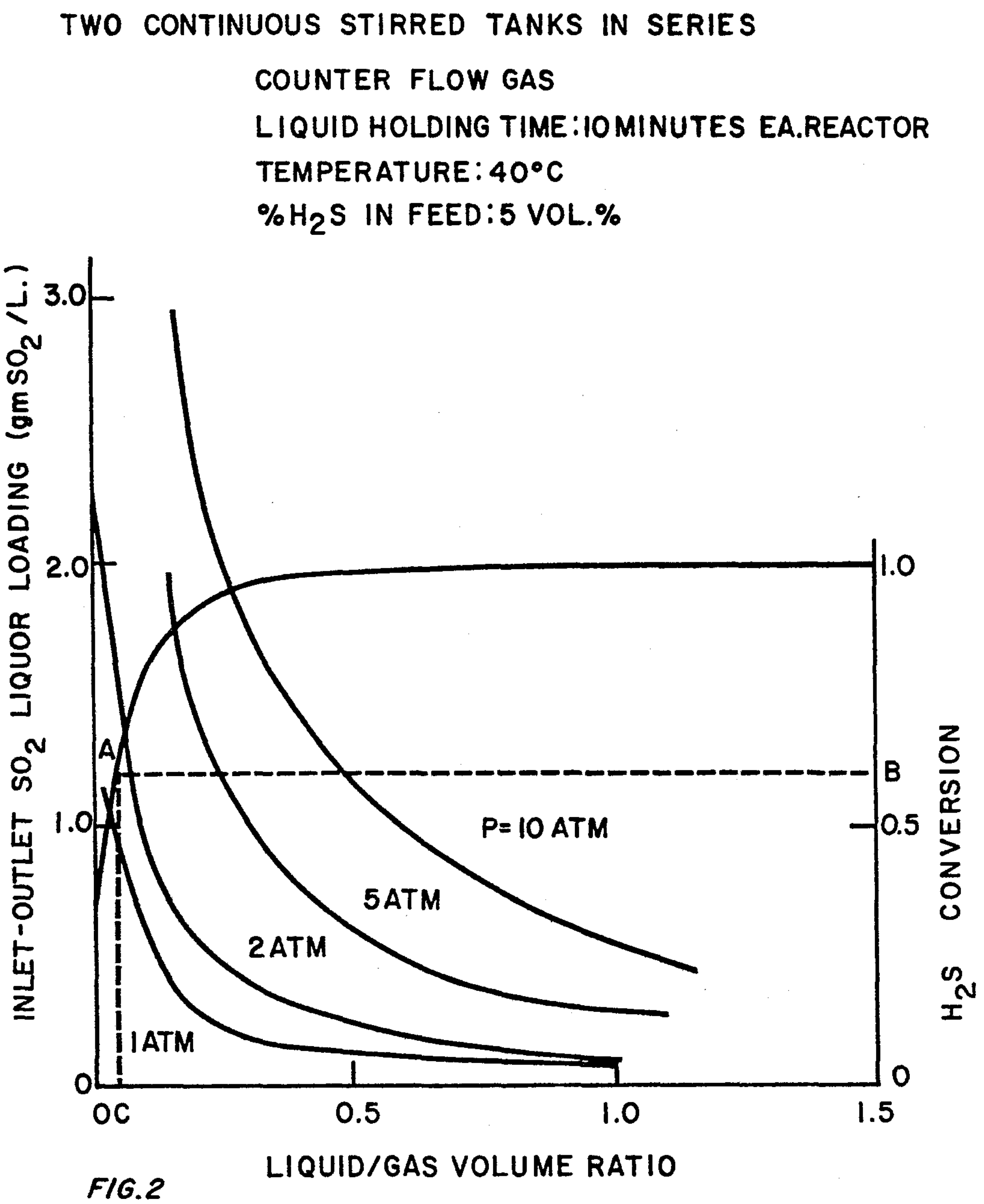
TWO CONTINUOUS STIRRED TANKS IN SERIES
COUNTER FLOW GAS
LIQUID HOLDING TIME: 10 MINUTES EA. REACTOR
TEMPERATURE: 40°C
% H2S IN FEED: 5 VOL.%
INLET-OUTLET SO2 LIQUOR LOADING (gm SO2 /L.)
3.0
2.0
1.0
0
A
B
P= 10 ATM
5 ATM
2 ATM
1 ATM
1.0
0.5
0
H2S CONVERSION
0C
0.5
1.0
1.5
LIQUID/GAS VOLUME RATIO

FIG.2

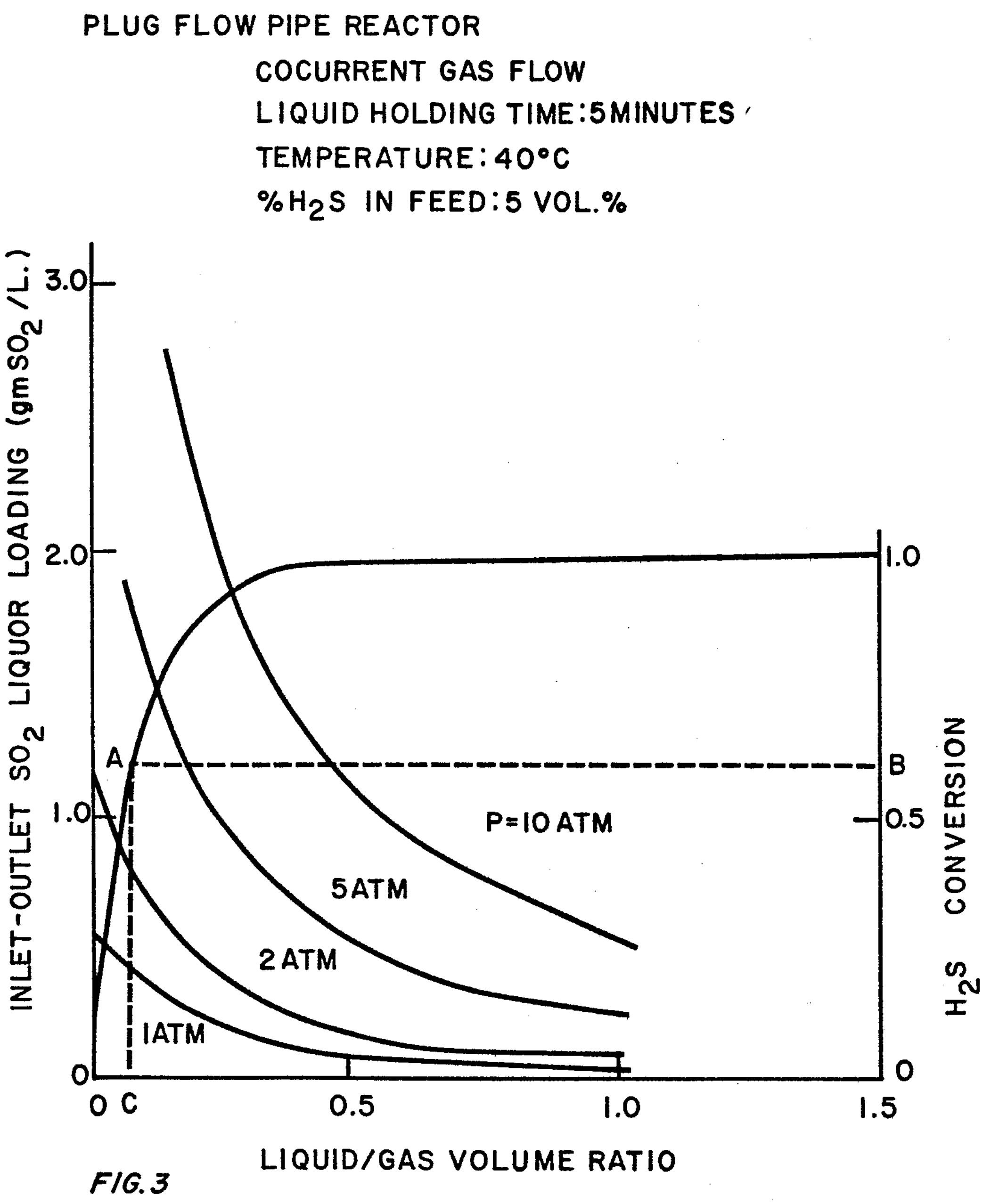
PLUG FLOW PIPE REACTOR
COCURRENT GAS FLOW
LIQUID HOLDING TIME: 5 MINUTES
TEMPERATURE: 40°C
% $H_2S$ IN FEED: 5 VOL.%
INLET-OUTLET $SO_2$ LIQUOR LOADING (gm $SO_2$/L.)
3.0
2.0
1.0
0
A
B
C
P=10 ATM
5 ATM
2 ATM
1 ATM
1.0
0.5
0
$H_2S$ CONVERSION
0
0.5
1.0
1.5
LIQUID/GAS VOLUME RATIO

*FIG. 3*

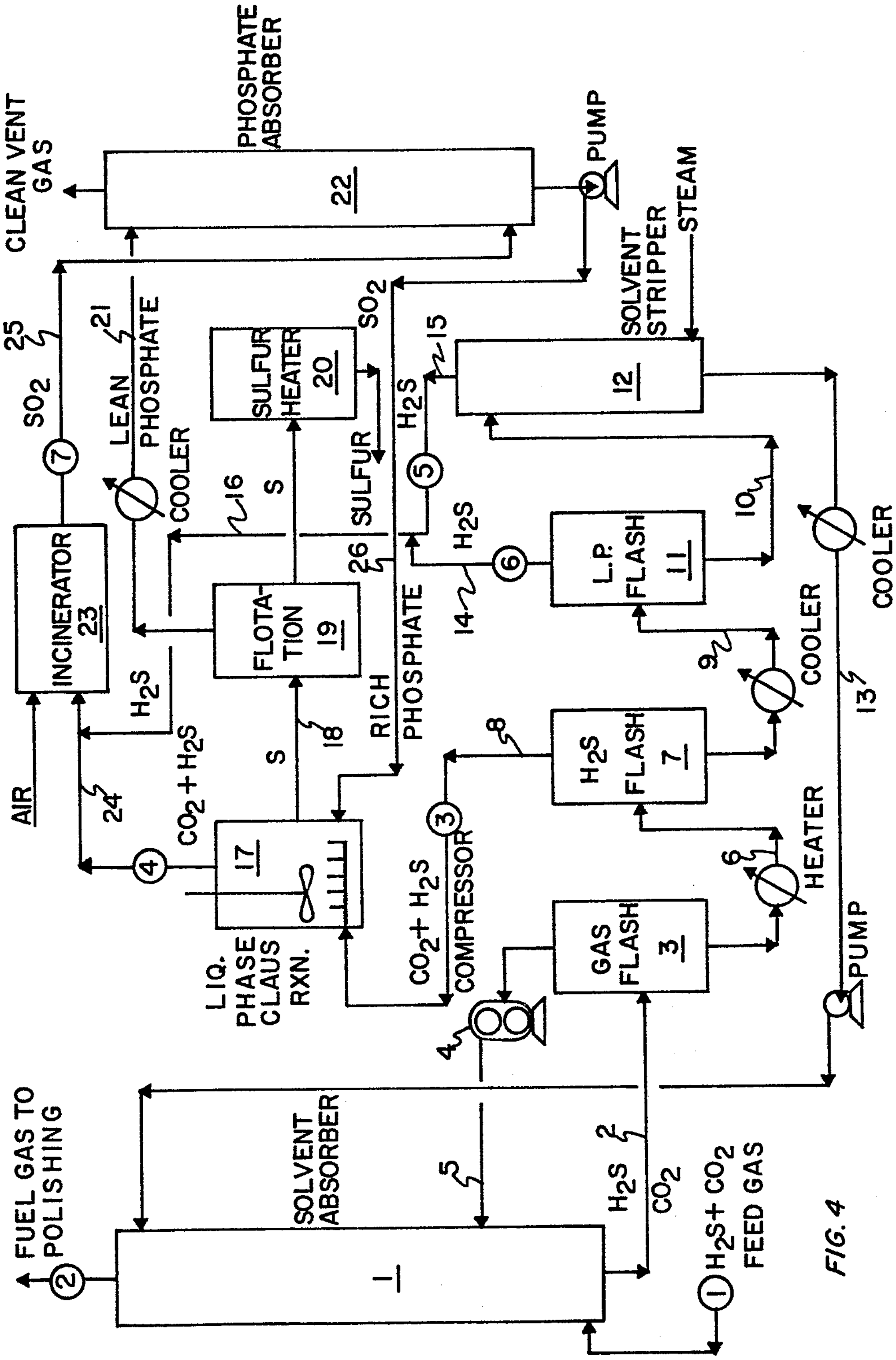
CLEAN VENT GAS
PHOSPHATE ABSORBER
22
PUMP
STEAM
SOLVENT STRIPPER
12
15
$H_2S$
$SO_2$
25
21
LEAN PHOSPHATE
SULFUR HEATER
20
SULFUR
COOLER
16
S
INCINERATOR
23
7
5
26
6
L.P. FLASH
11
10
COOLER
14
FLOTA-TION
19
RICH PHOSPHATE
$H_2S$
AIR
24
$CO_2 + H_2S$
4
18
17
8
$H_2S$ FLASH
7
9
13
LIQ. PHASE CLAUS RXN.
3
$CO_2 + H_2S$
COMPRESSOR
GAS FLASH
3
HEATER
6
PUMP
4
FUEL GAS TO POLISHING
2
SOLVENT ABSORBER
5
1
$H_2S$
$CO_2$
2
$H_2S + CO_2$ FEED GAS
1

FIG. 4

European Patent Office

# EUROPEAN SEARCH REPORT

0127206

Application number

EP 84 20 0499

## DOCUMENTS CONSIDERED TO BE RELEVANT

| Category | Citation of document with indication, where appropriate, of relevant passages | Relevant to claim | CLASSIFICATION OF THE APPLICATION (Int Cl 3) |
|---|---|---|---|
| A | US-A-3 363 989 (C.H. DEAL)<br>--- | | C 01 B 17/05<br>B 01 D 53/14<br>B 01 D 53/34<br>C 10 K 1/12<br>C 10 K 1/16<br>C 07 C 7/11 |
| A | US-A-3 953 586 (W. TANIMURA)<br>--- | | |
| A | FR-A-2 336 163 (COMP. FRANCAISE DE RAFFINAGE)<br>----- | | |
| | | | TECHNICAL FIELDS SEARCHED (Int. Cl. 3) |
| | | | C 01 B<br>C 10 K<br>B 01 D<br>C 07 C |

The present search report has been drawn up for all claims

| Place of search | Date of completion of the search | Examiner |
|---|---|---|
| THE HAGUE | 21-08-1984 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82